# EUROPEAN PATENT SPECIFICATION

(11) **EP 1 997 783 B1**
(45) Date of publication and mention of the grant of the patent: **18.03.2015**
(21) Application number: 08009750.4
(22) Date of filing: 28.05.2008
(51) Int. Cl.: C03B 37/014, C03B 37/018

(54) **A method of manufacturing an optical fiber preform using a high frequency induction thermal plasma**
Verfahren zur Herstellung einer Lichtwellenleitervorform mit thermischem Hochfrequenz-Induktionsplasma
Procédé de fabrication de préforme de fibre optique utilisant un plasma thermique à induction haute fréquence

(30) Priority: 29.05.2007 JP 2007142423
(43) Date of publication of application: 03.12.2008
(73) Proprietor: Shin-Etsu Chemical Co., Ltd., Chiyoda-ku, Tokyo 100-0004 (JP)
(72) Inventor: Otosaka, Tetsuya, Annaka-shi Gunma 379-0195 (JP)
(74) Representative: Kramer Barske Schmidtchen Patentanwälte PartG mbB

(56) References cited:
- WO-A2-2006/106068
- JP-A- 6 092 669
- JP-A- 2000 044 276
- US-A- 4 388 098
- US-A- 5 925 163

## Description

### BACKGROUND OF THE INVENTION

### Field of the Invention

The invention relates to a method of manufacturing an optical fiber preform using a high frequency induction thermal plasma.

### Description of the Related Art

A high frequency induction thermal plasma torch is an apparatus which supplies radio frequency current to a high frequency coil arranged around a gas passage pipe to form a plasma of a gas inside the gas passage pipe so that the plasma is ejected from the torch. This high frequency induction thermal plasma torch allows to obtain an ultra high-temperature plasma gas of about 10,000 degrees C. This plasma gas has relatively low linear velocity and also allows free choice of oxidative or reductive atmosphere, so that it is used as an ultra high-temperature reaction field.

An optical fiber having a pure silica glass core covered with a fluorine-doped silica glass clad features that is more resistant to ultraviolet rays and radiation than an optical fiber having a germanium-doped silica glass core with a pure silica glass clad, which is generally often used. This is because the former has an absence of Ge-O bond which has a low bonding energy.

A method for forming the fluorine-doped silica glass clad on the pure silica glass core is disclosed by Japanese Patent Publication No. 04-079981 (1992) and Japanese Patent Publication No. 02-047414 (1990). The former publication discloses a method which comprises depositing pure silica glass particles on the peripheral of a pure silica rod to form a porous glass layer and transparently vitrifying in a fluorine-containing atmosphere. The latter publication discloses a method which comprises directly depositing a transparent fluorine-doped silica glass on the peripheral of a pure silica glass rod by means of a plasma flame.

A relative refractive-index difference of perform produced by the method according to Japanese Patent Publication No. 04-079981 (1992) is limited below about 0.7 %. However, the method has a high productivity and is suitable to form a thick clad layer. The method according to Japanese Patent Publication No. 02-047414 (1990) is inferior to the method according to Japanese Patent Publication No. 04-079981 (1992) in productivity, but allows a relative refractive-index difference of a preform manufactured to be greater than 0.7%.

With reference to Fig. 1, an explanation will be made on the method according to Japanese Patent Publication No. 02-047414 (1990). When a coil 2 arranged on a plasma torch 1 is supplied with high-frequency electric power, gases fed by a gas feeding apparatus 3 into a plasma torch 1 are changed to a plasma inside the plasma torch 1, and then injected as a plasma flame 4 in to a reaction chamber 5. The gases to be fed into the torch 1 can be argon, oxygen, silicon tetrachloride, fluorine-containing gas (silicon tetrafluoride, hexafluoroethane, sulfur hexafluoride, etc.) or the like. Fluorine-doped silica glass particles are generated in the plasma flame 4. Then, these fluorine-doped silica glass particles are deposited onto a surface of a pure silica glass core 6 as a target, which is vertically reciprocated and rotated in the reaction chamber 5. The glass particles not adhered onto the surface of the target 6 and an exhaust gas are discharged from the system through an exhaust port 7. In this way, thin film-like fluorine-doped glass is repeadedly deposited to produce an optical fiber preform having a clad layer with desired thickness.

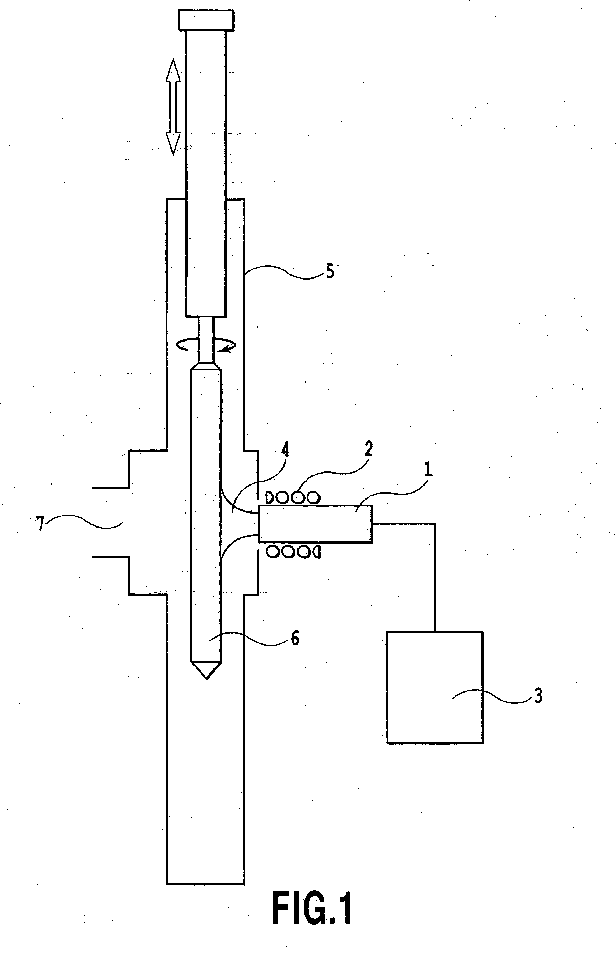

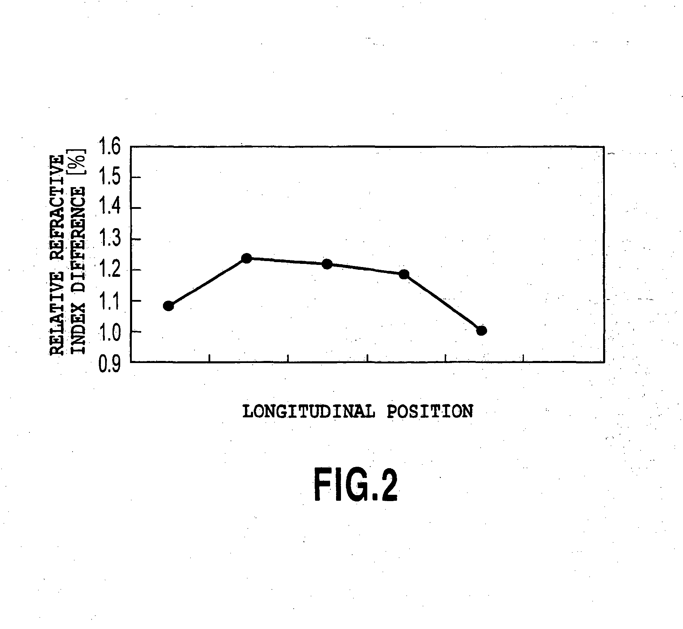

As shown in FIG. 2, there exists a problem that the preform produced by the method of FIG. 1 has a fluctuation of a relative refractive-index difference in its longitudinal direction. A refractive index of the core is constant in its longitudinal direction, so that this fluctuation is caused by the refractive index fluctuation of the clad layer generated by the plasma deposition process. Additionally, the relative refractive-index difference thus obtained by the process is also not sufficient.

WO 2006/106068 A2 discloses a process for the manufacture of a preform for optical fibres of quartz glass.

JP 2000-044276 A relates to the production of an optical fiber preform and an apparatus for producing an optical fiber preform.

US 5,925,163 discloses a method of making an optical fiber with an axially decreasing group velocity dispersion.

JP 6-092669 A relates to the production of an optical fiber preform.

US 4,388,098 discloses an apparatus for producing a multi-component glass fiber preform.

### SUMMARY OF THE INVENTION

It is an object of the present invention to provide a method for manufacturing an optical fiber preform which can suppress the fluctuation of a relative refractive-index difference in its longitudinal direction and improving an average value of the relative refractive-index difference in its longitudinal direction.

The present invention provides a method of manufacturing an optical fiber preform including a step of feeding at least glass raw material, dopant material and oxygen gas to a high frequency induction thermal plasma torch to synthesize glass particles in plasma therein, and a step of rotating and repeatedly reciprocating a glass rod relative to the plasma torch to deposit the synthesized glass particles onto the glass rod, wherein the feeding step includes a steps of feeding the glass raw material to the plasma torch in a first direction of the reciprocating motion of the glass rod, and characterized in that said feeding step further comprises a step of reducing a feeding amount of the glass raw material to the plasma torch in a second direction of the reciprocating motion relative to a feeding amount of the glass raw material to the plasma torch in the first direction, and wherein the method further includes a step of making the moving speed of the glass rod in the second direction faster than that in the first direction.

Preferably, in the reducing step the feeding amount of the glass raw material to the plasma torch in the second direction is zero.

Furthermore preferably, the method further includes a step of supplying radio frequency electric power for generating a plasma to the plasma torch, an amount of the electric power in the second direction being lower than that in the first direction.

Further features of the present invention will become apparent from the following description of exemplary embodiments with reference to the attached drawings.

### BRIEF DESCRIPTION OF THE DRAWINGS

FIG. 1 is a schematic vertical sectional view for explaining a method of manufacturing an optical fiber preform, depositing a clad layer onto a glass core as a target with a radio frequency induction thermal plasma torch;

FIG. 2 is a graph showing a fluctuation of a relative refractive-index difference of an optical fiber preform in its longitudinal direction, which is produced by a conventional method;

FIG. 3 is a graph showing a relationship between a target temperature when depositing a clad layer and a relative refractive-index difference of an optical fiber preform formed;

FIG. 4 is a graph showing a temperature of a target in its longitudinal direction when reciprocating the target relative to a plasma torch immediately before the target is subject to a plasma flame from the plasma torch in a conventional method;

FIG. 5 is a graph showing a temperature of a target in its longitudinal direction immediately before the target is subject to a plasma flame from a plasma torch in a method according to the present invention; and

FIG. 6 is a graph showing distributions of relative refractive-index difference in the optical fiber preform in its longitudinal direction, which are obtained in Example 1 and Comparative Example 1.

### DESCRIPTION OF THE EMBODIMENTS

The present inventor found that the refractive index of the glass thin film, which is formed by a deposition of glass particles onto a glass rod as a target, is closely related to the temperatures of the glass rod used when forming the glass thin film. That is, during the deposition of the glass particles onto the target, the relatively reciprocating movement between the target and the plasma torch causes the temperature fluctuation of the target in its longitudinal direction. As a result, the dope amount of fluorine decreases at a portion where a temperature of the target is higher and increases at a portion where a temperature of the target is lower. The inventor found that the fluctuation of the relative refractive index difference of the optical fiber preform in its longitudinal direction is caused by this phenomenon. Further, the inventor found that the minimization of the temperature fluctuation in the longitudinal direction of the target immediately before being subject to a plasma flame allows to produce an optical fiber perform having a stable relative refractive index difference in its longitudinal direction. The present invention was made based on these recognitions.

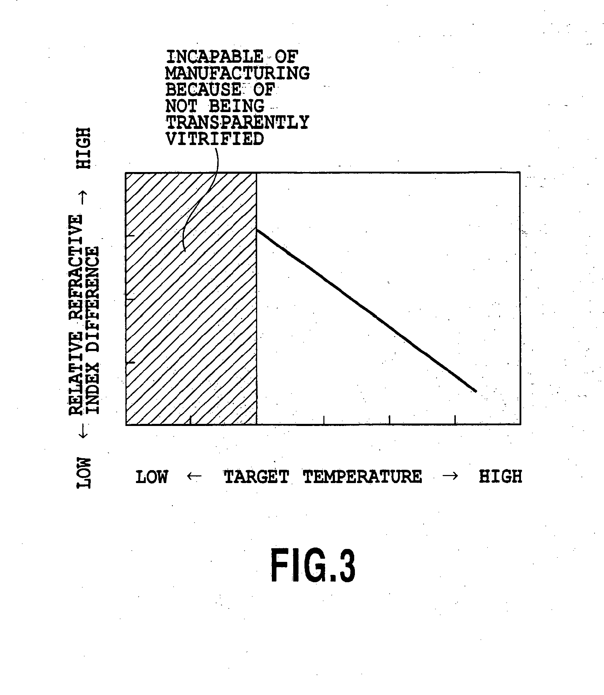

As shown in FIG. 3, even if conditions regarding gas and plasma are the same, an amount of fluorine to be doped is decreased when temperature of the target is relatively high. Accordingly, the refractive index of the clad is increased and the relative refractive index difference is lowered. When a temperature at a position of the target to be subject to a plasma flame is relatively low, an amount of fluorine to be doped is increased. Accordingly, the relative refractive index difference of the optical fiber preform is increased. On the other hand, if a temperature at a position of the target to be subject to a plasma flame is too low, it is impossible to fabricate a transparent optical fiber preform. Therefore, it is necessary to make a temperature at any position of the target higher than a predetermined temperature at which a transparent glass is deposited.

Hereinafter, such a lower limit temperature required for fabricating a transparent glass is referred to as a minimum vitrifying temperature.

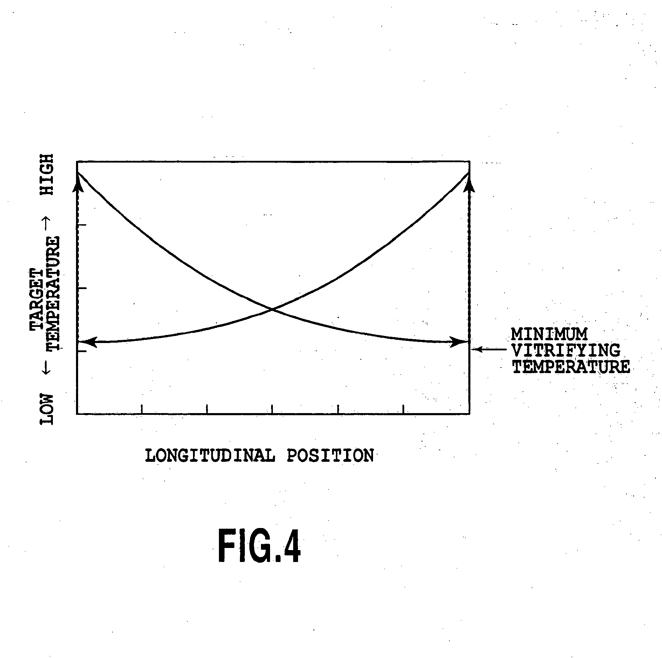

FIG. 4 shows a temperature in the longitudinal direction of the target 6 immediately before being subjected to the plasma flame 4 when the target 6 moves reciproctedly relative to the plasma torch 1.

In the conventional method where the glass raw material is fed to the torch 2 in both of the forward and backward directions with the same feeding amount, as shown in FIG. 4, the plasma torch is moved from one of the turning positions of the target to some position in the longitudinal direction of the target, and then the plasma torch is moved from the other turning position of the target to the same position. A temperature at the position of the target immediately before being subject to the plasma flame in those two situations, i.e., in the forward and backward movements, are different except the center position of the target in the longitudinal direction of the target. Therefore, an amount of fluorine to be doped at each position of the target 6 except the center position in the longitudinal direction of the target 6 in the forward and backward movements of the target 6 relative to the plasma torch 1 are different, and the relative refractive index difference of the target 6 in its longitudinal direction becomes instable.

Further, in the vicinity of one of the turning positions of the target 6, when the plasma torch 1 is approaching to this turning position from the opposite side of the target 6, the target 6 is cooled while the target 6 moves back and forth relative to the plasma torch 1 between the turning positions. Accordingly, the temperature in the vicinity of the turning position of the target 6 immediately before being subject to the plasma flame 4 is lowest in the longitudinal direction of the target 6. However, when the target 6 reaches one of the turning positions relative to the plasma torch 1 and is about to move toward the other turning position, the temperature in the vicinity of the turning position immediately before being subject to the plasma flame 4 is highest in the longitudinal direction of the target 6.

On the other hand, a temperature at any position of the target 6 should be maintained always higher than the minimum vitrifying temperature until the next deposition is made again after the passage of the plasma torch 1. Accordingly, in order to prevent the temperatures in the vicinities of the turning positions of the target 6 from falling bellow the minimum vitrifying temperature, it is necessary to increase a high frequency electric power for generating a plasma to be supplied to the coil 2. However, if the electric power for generating a plasma is increased, the maximum temperatures in the vicinities of the turning positions becomes higher. As a result, the average temperature in the longitudinal direction of the target 6 becomes higher and the relative refractive index difference is lowered.

On the other hand, the present invention
(1) feeds the plasma torch 1 with a glass raw material to deposit glass particles onto the target 6 when the target 6 moves relative to the plasma torch 1 in the forward direction (the first stroke), and
(2) does not feed the plasma torch 1 with the glass raw material when the target 6 moves relative to the plasma torch in the backward direction (the second stroke).

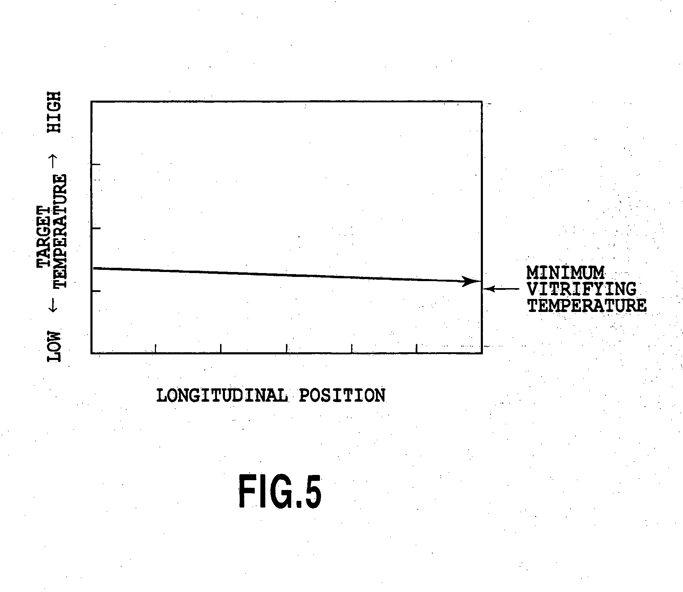

As a result, the temperature of the target 6 in the backward direction hardly rises. As shown in FIG. 5, the fluctuation of the temperature of the target 6 in its longitudinal direction becomes smaller. According to the present invention the moving speed of the target 6 relative to the plasma torch 1 in the backward direction is made faster than that in the forward direction. It is preferable to set the moving speed of the target 6 in the backward direction to the upper limit of the apparatus performance from the points of view of the stabilization of the relative refractive index difference in the longitudinal direction and the productivity improvement.

Further in the present invention, it is preferable to make the electric power to be supplied to the plasma torch 1 while the target 6 moves in the backward direction lower than that while the target 6 moves in the forward direction.

As a result, the temperature fluctuation in the longitudinal direction of the target 6 is more suppressed. Preferably, the electric power to be supplied to the plasma torch 1 in the backward direction is set as low as possible as long as a stable plasma flame 4 is maintained.

According to the method of the present invention, as shown in FIG. 5, the temperature change of the target 6 in its longitudinal direction by the plasma torch 1 is stable. Therefore, it is possible to make the temperature of target 6 in all area in its longitudinal direction closer to the minimum vitrifying temperature. Accordingly, the relative refractive index difference of the target 6 in all area in its longitudinal direction can be stabilized and the average value of the relative refractive index difference is also enhanced.

### EXAMPLE 1

A fluorine-doped silica glass layer was deposited onto a silica glass rod having a 50 mm outer diameter and a 1100 mm length by using the plasma torch 1. The relative moving speed between the plasma torch 1 and the target 6 in the forward direction was set at 75 mm/min. Silicon tetrachloride and silicon tetrafluoride, as a glass raw material and a source of fluorine, as well as argon and oxygen gases were fed to the plasma torch 1. The electric power to be supplied to the plasma torch 1 was set at 50 kW, which is a lower limit power required for vitrifying the deposited layer.

The relative moving speed between the plasma torch 1 and the target 6 in the backward direction was set at 500 mm/min. Argon and oxygen gases were fed to the plasma torch, while silicon tetrachloride and silicon tetrafluoride, as a glass raw material and a source of fluorine, were not fed to the plasma torch 1. The electric power to be supplied to the plasma torch 1 was set at 8 kW, which is a lower limit power required for maintaining the stable plasma flame 4.

Under the conditions, the plasma torch 1 was reciprocated 50 times to deposit glass particles onto the target 6 to form a fluorine-doped glass layer as a clad on the target 6. The relative refractive-index difference distribution of the optical fiber perform, which was obtained by sintering the fluorine-doped glass layer to be transparently vitrified , was measured by means of an optical fiber preform analyzer.

### COMPARATIVE EXAMPLE 1

A fluorine-doped silica glass layer was deposited onto a silica glass rod having a 50 mm outer diameter and a 1100 mm length using a plasma torch 1. The relative moving speed of the target 6 to the plasma torch 1 was set at 75 mm/min in both of the forward and backward directions. Argon gas, oxygen gas, silicon tetrachloride and silicon tetrafluoride were fed to the plasma torch 1. The electric power to be supplied to the plasma torch 1 was set at 53 kW, which is a lower limit power required for transparently vitrifying the deposition layer in the vicinities of the turning positions of the target 6, where the temperature of the target 6 immediately before being subject to the plasma flame 4 becomes lowest in the longitudinal direction of the target 6.

Under the conditions, the plasma torch 1 was reciprocated 50 times to deposit glass particles onto the target 6 to form a fluorine-doped layer on the target 6. The relative refractive-index difference distribution of the optical fiber perform, which was obtained by sintering the fluorine-doped glass layer to be transparently vitrified, was measured by using an optical fiber preform analyzer.

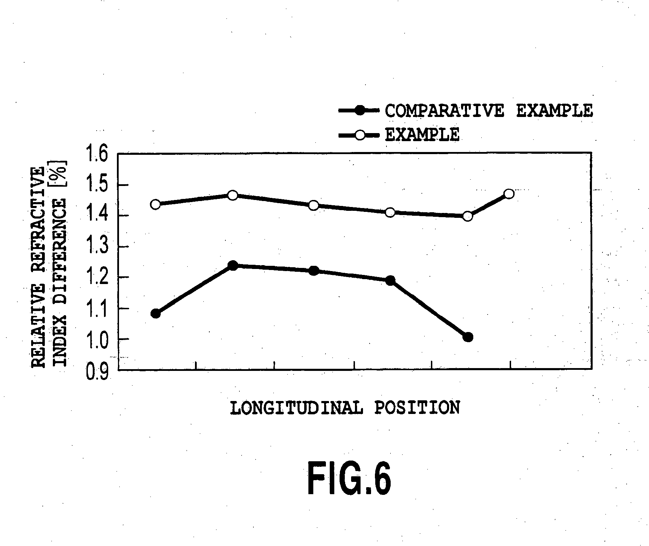

FIG. 6 shows the distributions of the relative refractive-index difference in the longitudinal direction of the preforms fabricated in Example 1 and Comparative Example 1. The deviation of the relative refractive-index difference in the longitudinal direction of the target 6 in Example 1 was small, i.e., 0.07%, while that of Comparative Example 1 was at most 0.24%. Further, the maximum relative refractive-index difference of the target 6 in Example 1 was improved to 1.47%, while that in Comparative Example 1 was 1.24%.

Thus, according to the present invention, it is possible to significantly improve the stability and optical characteristics of an optical fiber preform in its longitudinal direction. When fabricating a fluorine-doped clad optical fiber preform, fluorine-containing gas such as silicon tetra-fluoride, hexa-fluoro-ethane and sulfur hexafluoride can be used as a dopant in place of silicon tetra-fluoride to obtain a similar effect. Further, regarding dopants other than fluorine, the similar effect also can be obtained by using the present invention as long as an amount of the dopant depends on the rod temperature.

In the above example, while the feeding of the glass raw material to the plasma torch in the backward direction was cut off, the present invention is not limited to this example. It can be configured to reduce an amount of the glass raw material to be fed in the backward direction of the reciprocating movement of the target less than that in the forward direction. In this case, compared with the case of cutting off the feeding of the glass raw material in the backward direction, the disturbance to the plasma flame is reduced and accordingly the plasma flame becomes more stable.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A method of manufacturing an optical fiber preform comprising the steps of :
feeding at least glass raw material, dopant material and oxygen gas to a high frequency induction thermal plasma torch (1) to synthesize glass particles in plasma therein; and
rotating and repeatedly reciprocating a glass rod (6) relative to said plasma torch (1) to deposit the synthesized glass particles onto said glass rod (6);
wherein said feeding step comprises the steps of: feeding said glass raw material to said plasma torch (1) in a first direction of the reciprocating motion of said glass rod (6); and **characterized in that** said feeding step further comprises a step of reducing a feeding amount of said glass raw material to said plasma torch (1) in a second direction of said reciprocating motion relative to a feeding amount of said glass raw material to said plasma torch (1) in said first direction, and further comprising the step of making the moving speed of said glass rod (6) in said second direction faster than that in said first direction.

2. The method of manufacturing an optical fiber preform according to claim 1, wherein in the reducing step said feeding amount of said glass raw material to said plasma torch (1) in said second direction is zero.

3. The method of manufacturing an optical fiber preform according to claim 1 or 2, further comprising the step of: supplying high frequency electric power for generating a plasma to said plasma torch (1), an amount of said electric power in said second direction being lower than that in said first direction.

## Patentansprüche

1. Verfahren zur Herstellung einer Lichtleitfaser-Vorform, umfassend die Schritte:
Zuführen von mindestens einem Glasausgangsmaterial, einem Dotiermaterial und Sauerstoffgas zu einem thermischen Hochfrequenzinduktionsplasmabrenner (1) zum Synthetisieren von Glasteilchen in einem Plasma und
Drehen und wiederholtes Hin- und Herbewegen eines Glasstabs (6) relativ zu dem Plasmabrenner (1) zum Abscheiden der synthetisierten Glasteilchen auf dem Glasstab (6),
wobei der Zuführungsschritt die Schritte umfasst: Zuführen des Glasausgangsmaterials zu dem Plasmabrenner (1) in einer ersten Richtung der Hin- und Herbewegung des Glasstabs (6) und **dadurch gekennzeichnet, dass** der Zuführungsschritt ferner einen Schritt des Verminderns einer Zuführungsmenge des Glasausgangsmaterials zu dem Plasmabrenner (1) in einer zweiten Richtung der Hin- und Herbewegung relativ zu einer Zuführungsmenge des Glasausgangsmaterials zu dem Plasmabrenner (1) in der ersten Richtung umfasst, und ferner einen Schritt umfasst, bei dem die Bewegungsgeschwindigkeit des Glasstabs (6) in der zweiten Richtung höher gemacht wird als in der ersten Richtung.

2. Verfahren zur Herstellung einer Lichtleitfaser-Vorform nach Anspruch 1, bei dem in dem Schritt des Verminderns die Zuführungsmenge des Glasausgangsmaterials zu dem Plasmabrenner (1) in der zweiten Richtung Null ist.

3. Verfahren zur Herstellung einer Lichtleitfaser-Vorform nach Anspruch 1 oder 2, das ferner den Schritt des Zuführens von elektrischer Hochfrequenzenergie zum Erzeugen eines Plasmas zu dem Plasmabrenner (1) umfasst, wobei die Menge der elektrischen Energie in der zweiten Richtung niedriger ist als diejenige in der ersten Richtung.

## Revendications

1. Procédé de fabrication d'une préforme de fibre optique comprenant les étapes :
d'alimentation au moins en matière première de verre, en matériel dopant et en oxygène gazeux d'un chalumeau (1) à plasma thermique à induction à haute fréquence pour synthétiser des particules de verre dans le plasma ; et
de rotation et de mouvement de va-et-vient répétitif d'une tige (6) de verre par rapport audit chalumeau (1) de plasma pour déposer les particules de verre synthétisées sur ladite tige (6) de verre ;
dans lequel ladite étape d'alimentation comprend les étapes :
d'alimentation en ladite matière première de verre dudit chalumeau (1) à plasma dans une première direction du mouvement de va-et-vient de ladite tige (6) de verre ; et **caractérisé en ce que** ladite étape d'alimentation comprend en outre une étape de réduction d'une quantité d'alimentation de ladite matière première de verre audit chalumeau (1) à plasma dans une seconde direction dudit mouvement de va-et-vient par rapport à une quantité d'alimentation de ladite matière première de verre audit chalumeau (1) à plasma dans ladite première direction, et comprend en outre l'étape pour rendre la vitesse de déplacement de la tige (6) de verre dans ladite seconde direction plus rapide que celle dans ladite première direction.

2. Procédé de fabrication d'une préforme de fibre optique selon la revendication 1, dans lequel dans l'étape de réduction ladite quantité d'alimentation de ladite matière première de verre audit chalumeau (1) à plasma dans ladite seconde direction est nulle.

3. Procédé de fabrication d'une préforme de fibre optique selon la revendication 1 ou 2, comprenant en outre l'étape de : fournir de la puissance électrique haute fréquence pour générer un plasma audit chalumeau (1) à plasma, une quantité de ladite puissance électrique dans ladite seconde direction étant inférieure à celle dans ladite première direction.
